# EUROPEAN PATENT SPECIFICATION

(11) **EP 0 436 685 B1**
(45) Date of publication and mention of the grant of the patent: **03.05.1995**
(21) Application number: 90910201.4
(22) Date of filing: 21.06.1990
(51) Int. Cl.: F01N 1/02, F02K 1/00

(54) **AN ACOUSTIC LINER**
AKUSTISCHE BESCHICHTUNG
GARNITURE D'INSONORISATION

(30) Priority: 26.06.1989 US 371398; 26.06.1989 US 371399; 26.06.1989 US 371593
(43) Date of publication of application: 17.07.1991
(73) Proprietor: GRUMMAN AEROSPACE CORPORATION, Bethpage, NY 11714-3580 (US)
(72) Inventor: ARCAS, Noe, Plainview, NY 11803 (US); PARENTE, Charles, A., Oyster Bay, NY 11771 (US)
(74) Representative: Schmidt-Evers, Jürgen, Dipl.-Ing.
(86) International application number: US9003538
(87) International publication number: WO9101034

(56) References cited:
- CH-A- 0 348 808
- FR-A- 2 201 010
- FR-A- 2 396 868
- GB-A- 2 038 410
- US-A- 2 419 971
- US-A- 2 826 261
- US-A- 3 599 749
- US-A- 3 640 357
- US-A- 3 960 236
- US-A- 4 170 674
- US-A- 4 226 299
- US-A- 4 433 751

## Description

This invention generally relates to acoustic liners, and more particularly, to annularly or circumferentially shaped acoustic liners. Even more specifically, the present invention relates to a high efficiency broad band acoustic liner of the type especially well-suited to line the interior of a duct or shroud of a jet engine.

Acoustic liners are employed in many applications to attenuate noises generated by machinery or equipment; and, for instance, jet engines are almost universally provided with sound absorption liners or panels to attenuate sound waves produced inside the engines. One type of sound absorption liner commonly used in jet engines comprises a sound permeable facing sheet, a sound impermeable backing sheet and a honeycomb core interposed between these two sheets. Such devices are generally referred to as laminar absorbers, and one such absorber is disclosed in U.S. Patent No. 3,166,149.

These prior art panels are simple, strong and light weight, and heretofore have generally produced acceptable results. Government regulations limiting the level or amount of noise that may be emitted from a jet engine are becoming stricter, though, and it may be very difficult for many common types of jet engines to comply with these more stringent noise limits using conventional prior art laminar sound absorbers. A principle reason for this is that most laminar absorbers are able to absorb sound effectively only at certain discrete frequencies, and between these discrete absorption bands, the absorption falls to a very low level.

Various attempts have been made to broaden the frequency range over which laminar absorption panels effectively attenuate sound waves; however, heretofore these attempts have not yielded any commercially practical designs. For example, a broader sound absorption characteristic may be obtained by providing the absorption panel with plural layers of permeable sheets and honeycomb cores, and examples of prior art devices of this general type are shown in U.S. Patents Nos. 3,439,774; 3,640,357 and 3,670,843. These prior art broad band acoustic liners are bulky and heavy, though, and are difficult to manufacture in a commercially practical manner. Another approach to increasing the frequency range over which laminar absorption panels effectively attenuate noises involves modifying the shape and design of the honeycomb structure, and examples of this approach are found in U.S. Patents 4,421,201; 3,913,702 and 3,831,710. These attempts usually result in a complex honeycomb design that also is difficult and expensive to manufacture.

A similar honeycomb structure is known from GB-A-2 038 410. However, in GB-A-2 038 410 the honeycomb structure is used in a Helmholtz resonator.

Further, US-A-2 826 261 discloses an acoustic liner comprising a sound permeable inside plate and a sound impermeable outside plate, the inside and outside plates being spaced apart and forming an annular chamber therebetween. Between both plates a core member is secured in the annular chamber forming a sine wave form in the annular direction around the liner axis of the chamber. The core member and the inside plate form a multitude of varying depth sound absorption chambers to attenuate sound waves over a broad range of frequencies.

The present invention relates to an acoustic liner comprising a sound permeable inside plate forming a first closed annulus and defining a liner axis, a sound impermeable outside plate forming a second closed annulus located outside of and extending around the first closed annulus, the inside and outside plates being spaced apart and forming an annular chamber therebetween, a core member secured in the annular chamber between the inside and outside plates, the core member extending axially along and around the liner axis and forming a sine wave form in the annular direction around said axis, said sine wave form extending comletely around the liner axis, wherein the core member and the inside plate form a multitude of varying depth sound absorption chambers to attenuate sound waves over a broad range of frequencies and wherein the core member has an axial length and, in any place perpendicular to the liner axis and along said axial length, the core member forms a sine wave form having a generally unifom height and wave length, the acoustic liner further comprising a multitude of honeycomb structures located in the sound absorption chambers to further attenuate the sound waves.

Furthermore, the invention relates to a jet engine having an axially and circumferentially extending shroud defining an engine axis, a fan rotably mounted inside the shroud, a compressor and a turbine secured within the shroud, wherein an acoustic liner, as described above, circumferentially extends around the engine axis to attenuate sound waves generated in the engine.

Preferably, each of these honeycomb structures radially extends between and is secured to both the inside plates and the core member. Also, preferably, a bulk sound absorbing material is located in and completely fills the outer chambers of the liner to further attentuate the sound waves.

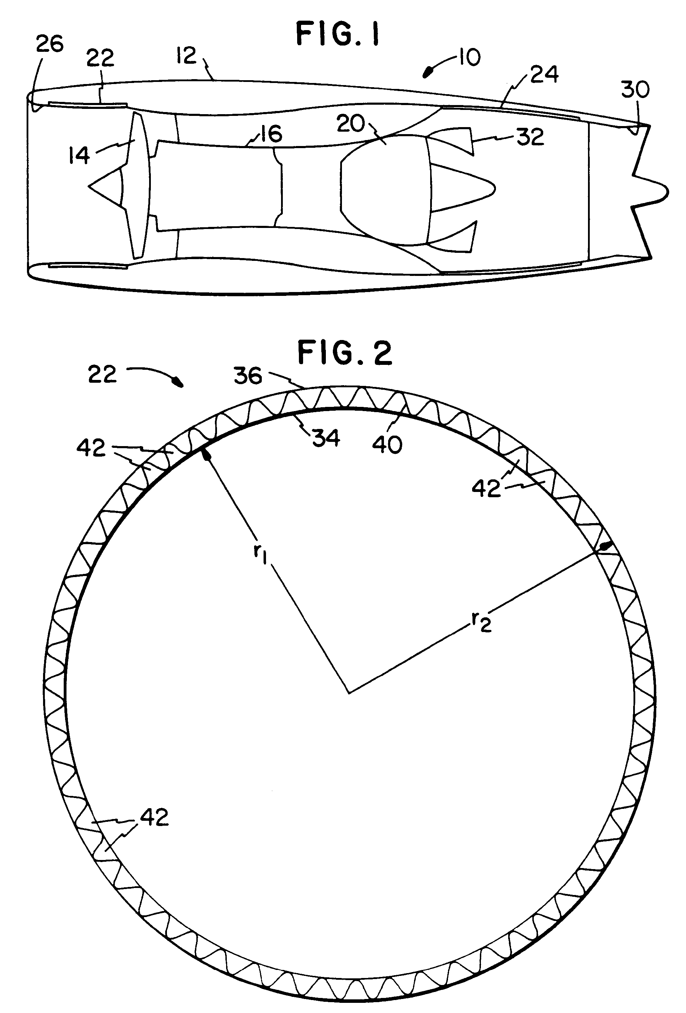

In the accompanying drawings, Figure 1 shows a gas turbine engine including a pair of acoustic liners according to the present invention.

Figure 2 is a front view of one of the acoustic liners.

Figure 3 is an enlarged front view of a portion of the acoustic liner.

Figure 4 is a further enlarged view of a portion of a core member of the acoustic liner, particularly showing the laminar construction thereof.

Figure 5 is a top view of the portion of the core member illustrated in Figure 4, with various layers partially broken away.

Figure 6 is similar to Figure 3 but also shows a bulk sound absorption material inside the acoustic liner.

Figure 7 is similar to Figure 3, but also shows a honeycomb structure held inside the acoustic liner.

Figure 8 is a cross-sectional view through the honeycomb structure, taken along line VIII-VIII of Figure 7.

Figure 9 is similar to Figure 2 and shows how the liner may be comprised of a plurality of sections.

Figure 1 outlines jet engine 10 generally comprising shroud or duct 12, fan 14, compressor 16, turbine 20 and acoustic liners 22 and 24. In a conventional manner, air is drawn into engine 10 through inlet 26 by rotating fan 14, and this air is compressed by compressor 16 and then heated in a combustion chamber by the combustion of fuel. The heated air is expanded through turbine 20, driving the turbine, which in turn is used to drive fan 14 and compressor 16, and the heated and expanded air is discharged from the engine through outlet 30. The discharged air is at a much a higher velocity than the air drawn into the engine through inlet 26, producing the desired thrust. Preferably, shroud 12, fan 14, compressor 16 and turbine 20 are of conventional construction and operate in a conventional manner, and it is unnecessary to describe these elements further herein.

In the operation of engine 10, significant sound waves are produced both in the forward and rearward sections of the engine. The sound waves in the forward section of the engine are primarily generated by the rotating fan 14, and typically the frequencies of these sound waves are within a relatively narrow band, with the central frequency of that band determined principally by the rotating speed of fan 14. The sound waves in the rearward section of the engine are produced by compressor 16, turbine 20 and the high velocity of air moving through this area of the engine, and typically, the frequencies of these sound waves are distributed over a relatively wide range in a highly irregular manner.

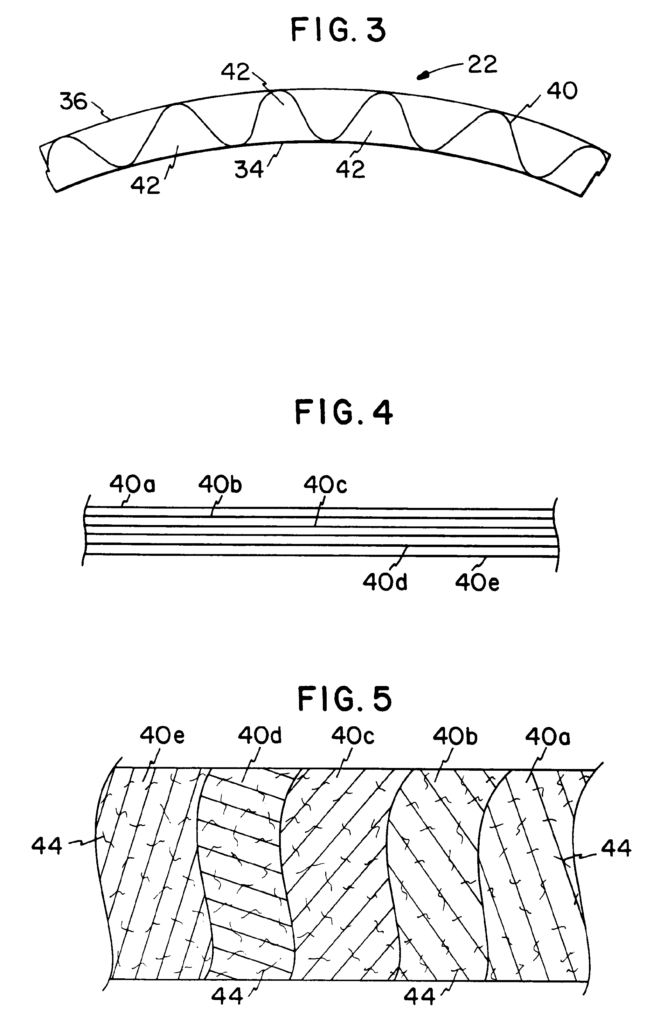

Acoustic liner 22 is secured within a forward area of engine 10 to attenuate sound waves generated in this area of the engine, and acoustic liner 24 is secured within a rearward area of the engine to attenuate sound waves produced therein. Preferably, as shown in Figure 1, liner 22 extends rearward from a position adjacent inlet 26 to a position immediately forward of fan 14, and liner 24 extends forward from a position adjacent outlet 30 to a location extending around air flow guides 32 of the engine. Liners 22 and 24 are generally identical, and thus only one, liner 22, shown in detail in Figures 2 and 3, will be described herein in detail.

Liner 22 includes inside plate 34, outside plate 36 and core member 40. Generally, inside plate 34, commonly referred to as a facing sheet, is sound permeable and forms a first closed annulus; and outside plate 36, commonly referred to as a backing sheet and which preferably is sound impermeable, forms a second closed annulus that extends around and is spaced from the inside plate. The inside and outside plates thus form a closed annular chamber therebetween; and core member 40 is secured in this annular chamber, between plates 34 and 36. The core member forms a sine wave form annularly extending around the inside plate; and in this way, the inside plate and the core member form a multitude of varying depth sound absorption chambers 42 that effectively attenuate sound waves over a broad range of frequencies. In particular, at each point in each chamber 42, sound waves are attenuated in one or more frequency bands, each of which is centered around a particular frequency determined by the radial depth of the sound absorption at that point. Because the depth of each chamber 42 varies significantly, each chamber will effectively attenuate sound waves over a relatively wide range of frequencies.

With the preferred embodiment of liner 22 shown in Figure 2, inside plate 34 and outside plate 36 both have substantially circular shapes, with the inside plate radially located inside of and concentric with the outside plate. Moreover, with this preferred liner 22, core member 40 has a uniform wave length, over its entire circumference, with the inside peaks or edges of the wave form engaging the inside plate and with the outside peaks or edges of the wave form engaging the outside plate. In addition, liner 22 has a substantially cylindrical shape, with the inside plate having a substantially uniform radius, r₁, over its entire length, and with the outside plate having a substantially uniform radius, r₂, over its entire length. Further, the shape of core member 40 is substantially uniform in the axial direction, so that the sound absorption chambers comprise axial channels extending along the entire length of the liner.

The inside plate 34 may be fabricated from metal, plastic, ceramic, or other suitable materials; and, for instance, the inside plate may comprise a single discretely perforated metal sheet, or a combination of such a metal sheet and a porous fibrous layer, or a porous composite weave material bonded to a woven wire mesh. Depending on the specific environment in which the acoustic liner is used, it may be desirable to provide the radially inside surface of the inside plate with a corrosion resistant coating. The outside plate 36 may also be fabricated from metal, plastic, ceramic or other suitable materials; and for example, the outside plate may comprise a solid aluminum plate.

Core member 40 may be made from any suitable material such as plastic, paper, metal, ceramic or from a woven composite material, and for instance, the core member may be fabricated from a flat sheet of aluminum that is bent into the desired sine wave shape. With the embodiment of liner 22 illustrated in Figures 2 and 3, the core member is constructed from a sound impermeable material, although, as discussed below, the core member may also be formed from a sound permeable material.

Figures 4 and 5 illustrate one preferred construction of the core member, in which this member is comprised of multiple layers 40a-e of a composite material that, in turn, comprises epoxy reinforced carbon fibers 44. The fibers in each layer 40a-e are aligned in a particular direction; and the individual layers are placed one on top of another with the fibers of the different layers aligned in a variety of different directions to produce a composite material that has a high strength in all directions. For example, the individual layers 40a-e of core member 40 may be formed in the preferred sine wave form and then secured together to form the core member. It should be noted that, while Figures 4 and 5 illustrate five individual layers, in practice it may be preferred to form the core member 40 from more layers, such as ten layers.

Core member 40 may be secured in the annular chamber between plates 34 and 36 in any suitable manner, although preferably the radially inside peaks or edges of the core member abut against and are secured to inside plate 34, and the radially outside peaks or edges of the core member abut against and are secured to outside plate 36. The preferred technique for securing the core member in place generally depends on the material or materials from which that core member is made. For instance, if the core member is made from epoxy reinforced carbon fibers, then the inside and outside edges of the core member may be secured, respectively, to the inside and outside plates by an adhesive. If the core member is made from aluminum, it may be bolted, welded or mechanically interlocked to the inside and outside plates of the liner 22.

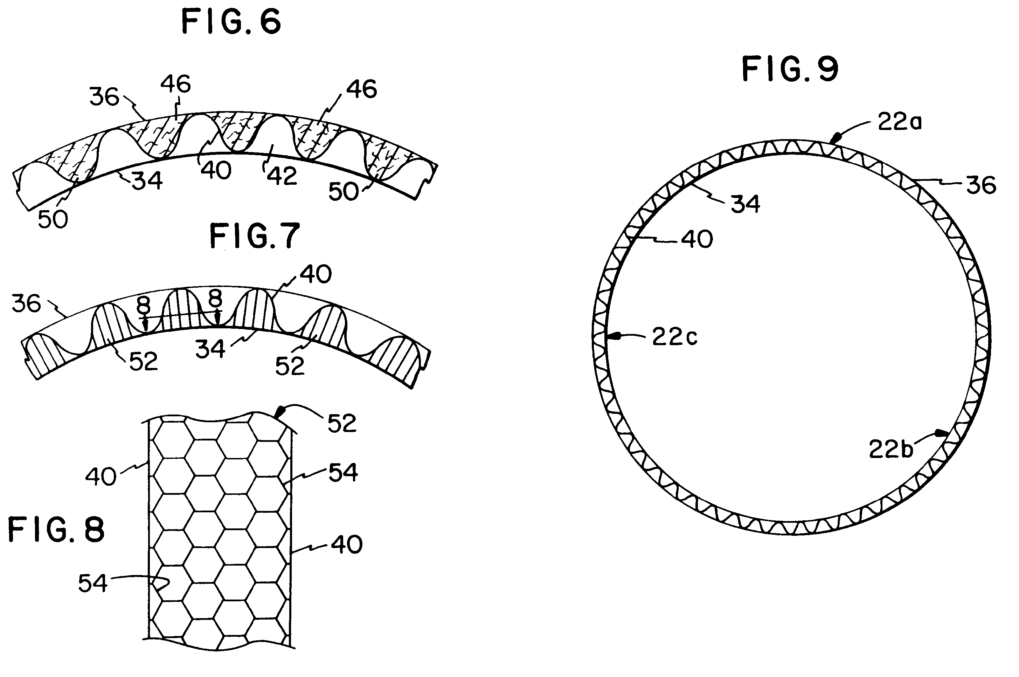

Various modifications may be made to the basic construction of liner 22 shown in Figures 2 and 3 to improve the sound attenuation characteristics of the acoustic liner. For example, with reference to Figure 6, core member 40 may be made from sound permeable material, and chambers 46, which are formed by the core member and outside plate 36, may be filled with a bulk acoustic absorbing material 50. In this way, chambers 42 and chambers 46 of liner 22 are both used to attenuate sound waves. Any suitable bulk acoustic material may be used, and for example, the material may be of the type identified by the trademark Kevlar.

As depicted in Figure 7 and 8, sound absorption chambers 42 is filled with honeycomb structures 52. Preferably, the walls 54 of each honeycomb structure 52 radially extend completely between inside plate 34 and core member 40, and each channel 42 is filled with a respective one of the honeycomb structures. These structures, first, preferably prevent or inhibit sound waves from moving axially through the interior of liner 22, and second, strengthen the liner, both in the axial and radial directions. Honeycomb structures 52 may have any commonly used honeycomb core design and may be made of any commonly used honeycomb material, and for instance, the structures may have cell sizes in the range of 1/8 to 1/2 inch. Honeycomb structures 52 are preferably secured to both inside plate 34 and core member 40, and this may be done in any suitable manner such as by an adhesive. In addition, if desired, the length of the sine waves formed by core member 40 may vary over the circumference of the core member. For instance, this wave length may be relatively small over one portion of the core member, and comparatively large over another portion of the core member.

As previously mentioned, liner 24 is substantially identical to liner 22. The principle differences between these liners relate to various parameters, such as the radial thickness of core member 40, the wave length of the sine pattern of the core member, and the specific materials from which the elements of the liner are made. As will be appreciated by those of ordinary skill in the art, these parameters are selected for each liner depending on the specific application in which the liner is used, and in particular, to help achieve the desired sound attenuation characteristics for the liner.

Acoustic liner 22 may be assembled and secured in jet engine 10 in any suitable manner. With reference to Figure 9, with one preferred technique, the liner is comprised of three sections 22a, b and c that are formed separately and then connected together as they are placed in position in engine 10. Each of these liner sections includes a respective one segment of inside plate 34, outside plate 36 and core member 40 so that when these sections are connected together, they form the complete liner illustrated in Figure 2. These liner sections may be secured in jet engine 10 and to each other in any suitable procedure, such as by bonding, welding, bolts or by mechanical interconnections.

A principle advantage of liner 22 is that it is comparatively simple and inexpensive to manufacture. To elaborate, each section 22a, b and c of the liner can be made by simply forming a sheet of aluminum or other suitable material into the desired sine wave shape to form a segment of the core member 40, and then placing this sine wave form between segments of the inside and outside plates. This procedure does not require any special cutting, notching or futher shaping of the core member and is not expensive or time consuming. At the same time, this technique produces the desired multiple, varying depth sound absorption chambers. Moreover, this manufacturing procedure places very few limitations on various parameters of liner 22--such as the radial thickness of the core member and the specific materials from which the core member and inside plate 34 are made--which may be changed to vary the sound attenuation characteristics of the liner, so that this procedure can be used to construct different liners that effectively attenuate sound waves over various, broad frequency ranges.

As described above, acoustic liners 22 and 24 have been described as being used adjacent the inlet and outlets of a jet engine. As will be understood by those of ordinary skill in the art, an acoustic liner embodying the present invention can be applied equally well to other parts of a jet engine where noise attenuation is desired or required. Indeed, this invention is not restricted to jet engines, but may also be used in any duct in which gas is flowing, or for enclosing any space in which sound waves are generated.

## Claims

1. An acoustic liner comprising:
a sound permeable inside plate (34) forming a first closed annulus and defining a liner axis;
a sound impermeable outside plate (36) forming a second closed annulus located outside of and extending around the first closed annulus, the inside and outside plates being spaced apart and forming an annular chamber therebetween;
a core member (40) secured in the annular chamber, between the inside and outside plates, the core member extending axially along and around the liner axis and forming a sine wave form in the annular direction around said axis, said sine wave form extending completely around the liner axis, wherein the core member (40) and the inside plate (34) form a multitude of varying depth sound absorption chambers (42, 46) to attenuate sound waves over a broad range of frequencies; and
wherein the core member has an axial length; and in any plane perpendicular to the liner axis and along said axial length, the core member forms a sine wave form having a generally uniform height and wave length;
characterized by further comprising
a multitude of honeycomb structures (52) located in the sound absorption chambers (42) to further attenuate the sound waves.

2. An acoustic liner according to claim 1, wherein:
the core member (40) includes a multitude of layers (40a - 40e) of reinforced carbon fibers (44); and the fibers of each layer are generally aligned in a respective one direction.

3. An acoustic liner according to claims 1 or 2 wherein:
the closed annular chamber defines an axis; and the core member (40) forms a multitude of inside and outside axially extending edges.

4. An acoustic liner according to claim 3, wherein:
the inside edges of the core member abut against the inside plate and extend axially therealong; and the outside edges of the core member abut against the outside plate and extend axially therealong.

5. An acoustic liner according to claims 3 or 4, wherein:
the inside edges of the core member are secured to the inside plate (34); and
the outside edges of the core member are secured to the outside plate (36).

6. An acoustic liner according to claim 5, wherein:
the inside edges of the core member are adhesively secured to the the inside plate (34);
and
the outside edges of the core member are adhesively secured to the outside plate (36).

7. An acoustic liner according to anyone of claims 1 to 6 wherein:
each honeycomb structure (52) radially extends completely between the inside plate (34) and the core member (40);
and
each honeycomb structure (52) is secured to both the inside plate (36) and the core member (40).

8. An acoustic liner according to any preceeding claim, further comprising a bulk sound absorbing material (50) located in the outer chambers (46) to further attenuate the sound waves.

9. An acoustic liner according to claim 8, wherein the bulk sound absorbing material (50) completely fills the outer chambers (46).

10. An acoustic liner according to any of claims 1 or 3 to 9, wherein the core member (40) is sound impermeable and is formed from a metal sheet.

11. A jet engine having an axially and circumferentially extending shroud (12) defining an engine axis, a fan (14) rotably mounted inside the shroud, a compressor (16) and a turbine (20) secured within the shroud (12),
**characterized in that**
an acoustic liner having the features of any of claims 1 to 10 circumferentially extends around the engine axis to attenuate sound waves generated in the engine (10).

## Patentansprüche

1. Akustische Beschichtung, umfassend:
eine schalldurchlässige Innenfläche (34), die einen ersten geschlossenen Ring bildet und eine Beschichtungsachse definiert;
eine schallundurchlässige Außenfläche (36), die einen zweiten geschlossenen Ring bildet und sich außerhalb sowie um den ersten geschlossenen Ring erstreckt, wobei die Innen- und Außenflächen voneinander beabstandet sind und zwischen sich eine ringförmige Kammer bilden;
ein in der ringförmigen Kammer befestigtes Kernelement (40), das zwischen den Innen- und Außenflächen angeordnet ist und sich in axialer Richtung sowohl entlang der Beschichtungsachse als auch um die Beschichtungsachse erstreckt und in zirkularer Richtung um die Achse eine Sinuswellenform bildet, wobei sich die Sinuswellenform vollständig um die Beschichtungsachse erstreckt und das Kernelement (40) mit der Innenfläche (34) eine Vielzahl von schallabsorbierenden Kammern (42, 46) unterschiedlicher Tiefe bildet, um Schallwellen über einen breiten Frequenzbereich zu dämpfen; und
wobei das Kernelement eine axiale Länge aufweist und in jeder Ebene senkrecht zu der Beschichtungsachse und entlang der axialen Länge eine Sinuswellenform aufweist mit einer im wesentlichen einheitlichen Höhe und Wellenlänge,
gekennzeichnet durch
eine Vielzahl von Wabenstrukturen (52), die in den schallabsorbierenden Kammern (42) vorhanden sind, um die Schallwellen weiter zu dämpfen.

2. Akustische Beschichtung nach Anspruch 1,
dadurch gekennzeichnet,
daß das Kernelement (40) eine Vielzahl von Schichten (40a - 40e) aus verstärkten Carbonfasern (44) aufweist, und
daß die Fasern jeder Schicht im wesentlichen entlang einer entsprechenden Richtung ausgerichtet sind.

3. Akustische Beschichtung nach Anspruch 1 oder 2,
dadurch gekennzeichnet,
daß die geschlossene ringförmige Kammer eine Achse definiert, und
daß das Kernelement (40) eine Vielzahl von sich axial erstreckenden inneren und äußeren Kanten bildet.

4. Akustische Beschichtung nach Anspruch 3,
dadurch gekennzeichnet,
daß die inneren Kanten des Kernelementes (40) gegen die Innenfläche (34) stoßen und sich in axialer Richtung entlang der Innenfläche (34) erstrecken, und
daß die äußeren Kanten des Kernelementes (40) gegen die Außenfläche (36) stoßen und sich in axialer Richtung entlang der Außenfläche (36) erstrecken.

5. Akustische Beschichtung nach Anspruch 3 oder 4,
dadurch gekennzeichnet,
daß die inneren Kanten des Kernelementes (40) an der Innenfläche (34) befestigt sind
und
daß die äußeren Kanten des Kernelementes (40) an der Außenfläche (36) befestigt sind.

6. Akustische Beschichtung nach Anspruch 5,
dadurch gekennzeichnet,
daß die inneren Kanten des Kernelementes (40) an die Innenfläche (34) geklebt sind,
und
daß die äußeren Kanten des Kernelementes (40) an die Außenfläche (36) geklebt sind.

7. Akustische Beschichtung nach einem der Ansprüche 1 bis 6,
dadurch gekennzeichnet,
daß jede Wabenstruktur (52) sich radial vollständig zwischen der Innenfläche (34) und dem Kernelemente (40) erstreckt, und
daß jede Wabenstruktur (52) sowohl an der Innenfläche (34) als auch an dem Kernelement (40) befestigt ist.

8. Akustische Beschichtung nach einem der vorhergehenden Ansprüche,
gekennzeichnet durch
ein voluminöses schallabsorbierendes Material (50), das in den äußeren Kammern (46) vorhanden ist, um die Schallwellen weiter zu dämpfen.

9. Akustische Beschichtung nach Anspruch 8,
dadurch gekennzeichnet,
daß das voluminöse schallabsorbierende Material (50) vollständig die äußeren Kammern (46) ausfüllt.

10. Akustische Beschichtung nach einem der Ansprüche 1 oder 3 bis 9,
dadurch gekennzeichnet,
daß das Kernelement (40) schallundurchlässig ist und aus einer Metallplatte gefertigt ist.

11. Düsentriebwerk mit einer sich axial und in Umfangsrichtung erstreckenden Verkleidung (12), die eine Triebwerksachse definiert, mit einem rotierbar innerhalb der Verkleidung befestigten Gebläse (14), mit einem Kompressor (16) und einer Turbine (20), die innerhalb der Verkleidung (12) befestigt sind,
dadurch gekennzeichnet,
daß sich eine akustische Beschichtung mit den Merkmalen nach einem der Ansprüche 1 bis 10 in Umfangsrichtung um die Triebwerksachse erstreckt, um die in dem Triebwerk (10) erzeugten Schallwellen zu dämpfen.

## Revendications

1. Garniture acoustique comprenant :
une plaque intérieure (34) perméable aux sons qui forme un premier anneau fermé et définit un axe de la garniture ; une plaque extérieure (36) imperméable aux sons qui forme un deuxième anneau fermé placé à l'extérieur du premier anneau fermé et qui s'étend autour de celui-ci, les plaques intérieure et extérieure étant espacées et formant une chambre annulaire entre elles :
un élément d'âme (40) fixé dans la chambre annulaire entre les plaques intérieure et extérieure, l'élément d'âme s'étendant axialement le long et autour de l'axe de la garniture et formant une forme d'onde sinusoïdale dans la direction annulaire autour dudit axe, ladite forme d'onde sinusoïdale s'étendant entièrement autour de l'axe de la garniture, dans laquelle l'élément d'âme (40) et la plaque intérieure (34) forment une multitude de chambres d'absorption des sons de profondeur variable (42, 46) pour atténuer les ondes sonores sur une large gamme de fréquences, et
dans lequel l'élément d'âme a une longueur axiale ; et, dans tout plan perpendiculaire à l'axe de la garniture et le long de ladite longueur axiale, l'élément d'âme forme une forme d'onde sinusoïdale ayant une hauteur et une longueur d'onde généralement uniformes ; caractérisée en ce qu'elle comprend en outre une multitude de structures en nid d'abeilles (52) logées dans les chambres d'absorption des sons (42) pour atténuer encore davantage les ondes sonores.

2. Garniture acoustique selon la revendication 1, dans laquelle l'élément d'âme (40) comprend une multitude de couches (40a à 40e) de fibres de carbone renforcées (44) ; et les fibres de chaque couche sont généralement alignées dans une même direction respective.

3. Garniture acoustique selon la revendication 1 ou 2, dans laquelle la chambre annulaire fermée définit un axe ; et l'élément d'âme (40) forme une multitude de crêtes intérieures et extérieures s'étendant axialement.

4. Garniture acoustique selon la revendication 3, dans laquelle les crêtes intérieures de l'élément d'âme butent contre la plaque intérieure et s'étendent axialement le long de celle-ci ; et les crêtes extérieures de l'élément d'âme butent contre la plaque extérieure et s'étendent axialement le long de celle-ci.

5. Garniture acoustique selon la revendication 3 ou 4, dans laquelle les crêtes intérieures de l'élément d'âme sont fixées à la plaque intérieure (34) ; et les crêtes extérieures de l'élément d'âme sont fixées à la plaque extérieure (36).

6. Garniture acoustique selon la revendication 5, dans laquelle les crêtes intérieures de l'élément d'âme sont fixées à la plaque intérieure (34) par collage ; et
les crêtes extérieures de l'élément d'âme sont fixées à la plaque extérieure (36) par collage.

7. Garniture acoustique selon l'une quelconque des revendications 1 à 6, dans laquelle chaque structure en nid d'abeilles (52) s'étend radialement sur toute la distance entre la plaque intérieure (34) et l'élément d'âme (40) ; et
chaque structure en nid d'abeilles (52) est fixée à la fois à la plaque intérieure (36) et à l'élément d'âme (40).

8. Garniture acoustique selon l'une quelconque des revendications précédentes, comprenant en outre une matière d'absorption des sons en vrac (50) placée dans les chambres extérieures (46) pour atténuer encore davantage les ondes sonores.

9. Garniture acoustique selon la revendication 8, dans laquelle la matière d'absorption des ondes sonores en vrac (50) remplit entièrement les chambres extérieures (46).

10. Garniture acoustique selon l'une quelconque des revendications 1 ou 3 à 9, dans laquelle l'élément d'âme (40) est imperméable aux sons et est formé de tôle.

11. Moteur à réaction ayant une enveloppe (12) s'étendant axialement et circonférentiellement, et définissant l'axe du moteur, un ventilateur (14) monté rotatif à l'intérieur de l'enveloppe, un compresseur (16) et une turbine (20) fixés à l'intérieur de l'enveloppe (12), caractérisé en ce qu'une garniture acoustique possédant les caractéristiques d'une quelconque des revendications 1 à 10 s'étend circonférentiellement autour de l'axe du moteur pour atténuer les ondes sonores engendrées dans le moteur (10).
